# EUROPÄISCHE PATENTSCHRIFT

(11) **EP 0 725 041 B1**
(45) Veröffentlichungstag und Bekanntmachung des Hinweises auf die Patenterteilung: **03.05.2000**
(21) Anmeldenummer: 94117008.6
(22) Anmeldetag: 27.10.1994
(51) Int. Cl.: C02F 3/02

(54) **Kläranlage**
Clarification plant
Installation de clarification

(43) Veröffentlichungstag der Anmeldung: 07.08.1996
(73) Patentinhaber: Hildebrandt, Horst, Dipl. Ing., 76228 Karlsruhe (DE); Völker, Ralf, Dipl.Ing., 76227 Karlsruhe (DE)
(72) Erfinder: Hildebrandt, Horst, Dipl. Ing., 76228 Karlsruhe (DE); Völker, Ralf, Dipl.Ing., 76227 Karlsruhe (DE)

(56) Entgegenhaltungen:
- EP-A- 0 071 960
- EP-A- 0 351 148
- DE-A- 3 147 927
- DE-A- 3 929 510

## Beschreibung

Die Erfindung betrifft eine Kläranlage vornehmlich für kommunales Abwasser, mit der das Abwasser in hintereinander stufenweise durchflossenen Becken mit wechselnden Klärstufen eines Klärverfahrens mindestens teilweise reinigbar ist. Derartige Kläranlagen sind beispielsweise im Taschenbuch der Stadtentwässerung von Karl Imhoff beschrieben. Da solche Anlagen gewartet und gelegentlich auch repariert werden müssen und der Klärbetrieb während der Wartungs- und Reparaturzeit in der Regel nicht unterbrochen werden darf, müssen die Anlagen so ausgelegt sein, daß sie - wenn auch u.U. eingeschränkt - auch bei Stillegung einer Beckeneinheit noch funktionsfähig bleiben.

Bisher wurden die Behandlungsbecken in Kläranlagen für kommunale Abwässer hintereinander in der Reihenfolge, wie sie der Klärvorgang vorgibt, mit Kaskadentechnik für den Abwasserfluß zwischen den einzelnen Becken angeordnet. Um den Klärbetrieb auch bei Ausfall einer Beckeneinheit weiterführen zu können, wurden bisher die Kläranlagen in mehreren nebeneinander angeordneten Klärstraßen - mindestens zwei - ausgeführt, wobei jede Klärstraße für sich eine funktionsfähige Anlage mit allen Klärstufen bildet. Je mehr Straßen dabei zur Verfügung stehen, desto geringer ist die Einschränkung des Klärbetriebes bei Ausfall einer Einheit. Mit der Zahl der Klärstraßen wächst jedoch der bauliche Aufwand der Gesamtanlage erheblich.

Die Anordnung der Becken entsprechend dem Klärablauf hintereinander wie auch die Aufteilung der Gesamtanlage in mehrere Klärstraßen führen zu einem ungünstigen Verhältnis von Wandfläche zu Flüssigkeitsvolumen und damit zu unwirtschaftlichen Baukonstruktionen. Darüber hinaus kann aus verfahrenstechnischen Gründen auch nötig sein, einzelne Klärstufen umfahrbar zu machen oder nur teilweise zu beschicken oder den Klärablauf zu verändern oder einzelne Stufen im Gegenstrom zu betreiben. Für solche Variationen des betrieblichen Ablaufs in der Kläranlage sind Anlagen mit Klärstraßen wenig geeignet.

Aus dem EPA 0351148 ist eine gattungsgleiche Kläranlage bekannt, in der das Abwasser in stufenweise durchflossenen Becken mit wechselnden Klärverfahren reinigbar ist. Sie besteht aus vorgefertigten mobilen Modulen, die für vornehmlich temporäre Klärzwecke nach Bedarf zusammenstellbar sind. Die Anlage entzieht sich von ihrer Aufgabe bestimmten Konstruktion her einer auf ortsfeste Anlagen bezogenen baulichen Optimierung.

Die Erfindung hat sich die Aufgabe gestellt, den bekannten Kläranlagentyp baulich so weiterzubilden, daß sich ein günstigeres Verhältnis von Wandflächen zu Flüssigkeitsvolumen für die Gesamtanlage und damit eine höhere Wirtschaftlichkeit ergibt, und ihn für variablere betriebliche Nutzung geeigneter zu machen.

Die Aufgabe wird gelöst durch eine Kläranlage, wie sie im Anspruch 1 angegeben ist. Zweckmäßige Ausgestaltungen der Erfindung sind in den Ansprüchen 2 - 8 beschrieben.

Die erfindungsgemäße Kläranlage weist für jede Klärstufe nur ein Becken auf. Die Becken können daher für die anfallende Schmutzwassermenge auf das günstiste Verhältnis von Wandfläche zu Volumen aller Becken der gesamten Anlage optimiert werden. Bei Ausfall einer Beckeneinheit kann der Betrieb durch Umschichtung der Klärstufen unter den vorhandenen Becken eingeschränkt aufrechterhalten werden. Umschichtungen sind möglich, indem zwei Klärstufen - zweckmäßig die mit geringerer Verweilzeit - in ein mit zwei Kammern ausgestatteten Becken verlegt werden. Oft besteht auch die Möglichkeit durch kurzzeitige Änderung des Klärablaufs unter Einsparung einer Klärstufe den Ausfall eines Beckens zu überbrücken.

Abschottungen in den Zellensträngen mit Hilfe von Schiebern nach Anspruch 6 machen die Steuerung jedes gewünschten Verlaufs des Medienflusses durch die Becken der Kläranlage möglich und ermöglichen weitgehende Flexibilität im Betrieb der Kläranlage.

Die Erfindung wird anhand von Beispielen der Figuren 1 - 8 erläutert.

Es zeigen:
- Figur 1:: Schema einer Anlage nach Stand der Technik (bisher)
- Figur 2:: Schema einer erfindungsgemäßen Anlage nach Anspruch 1
- Figur 3:: Querschnitt durch eine Wand nach den Ansprüchen 3 und 5 - 7
- Figuren 4 - 8:: Fünf Beispiele für unterschiedliche Steuerungen des Schmutzwasserflusses in einer Anlage mit Hilfe von Schiebern nach Anspruch 7

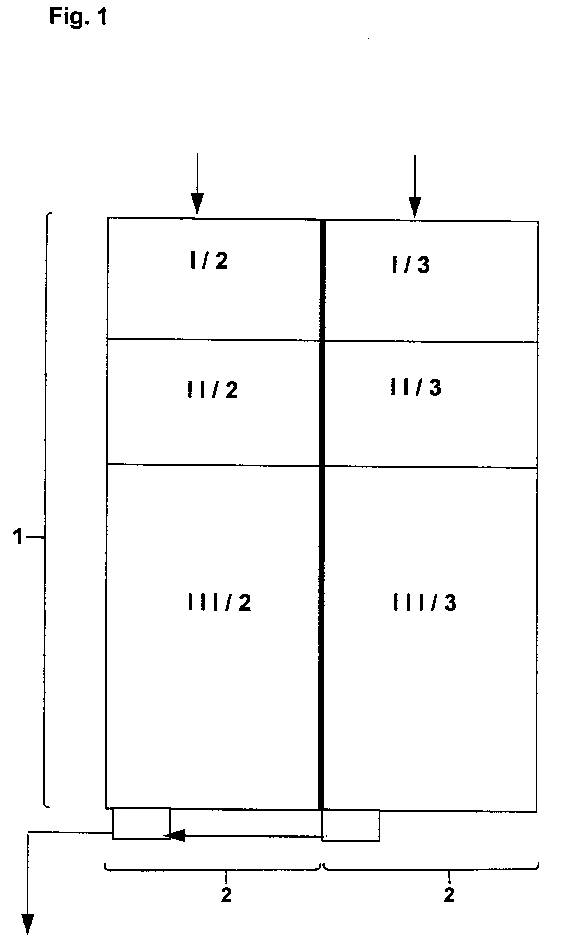

Figur 1 zeigt schematisch eine herkömmliche Kläranlage 1 mit zwei Klärstraßen 2,3 in Kaskadentechnik. Jede der Straßen weist je ein Becken für jede Klärstufe I,II,III - also insgesamt sechs Becken - auf, die nacheinander vom Abwasser durchflossen werden. Im Falle einer zweistraßigen Anlage fallen 50 % der Klärleistung bei Ausfall eines Beckens aus.

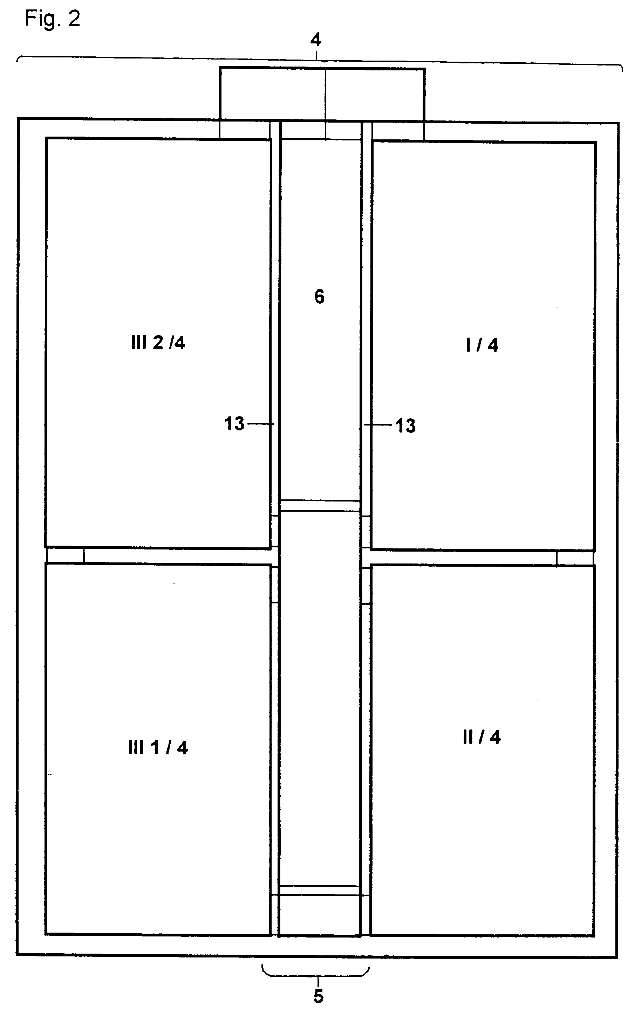

Figur 2 zeigt das Prinzip der erfindungsgemäßen Anlage 4. Sie umfaßt für jede der drei Klärstufen ein Becken I,II,III. Ein Becken - im Beispiel das größte Becken III - ist in zwei Kammern III/1 und III/2 aufgeteilt. Insgesamt werden hier für die gleiche Aufgabe wie bei der Anlage nach Fig. 1 vier Becken benötigt. Die in der Anlage 4 zwischen den Becken verlaufende Trennwand 5 ist zweischalig ausgebildet. Der Raum 6 zwischen den Schalen 13 steht für die Aufnahme von Medien- und Versorgungsleitungen zur Verfügung. Die Medienleitungen sind so geführt, daß die einzelnen Becken in jeder gewünschten Reihenfolge mit den Klärmedien beaufschlagbar sind, was große Flexibilität im Betrieb der Anlage ermöglicht. Der Raum 6 - bzw. die Zellen 7,8,9,10 - zwischen den Außenschalen 13 der Trennwand 5 können begehbar oder mindestens bekriechbar ausgebildet werden, wodurch die Leitungen leicht kontrollierbar und wartbar sind.

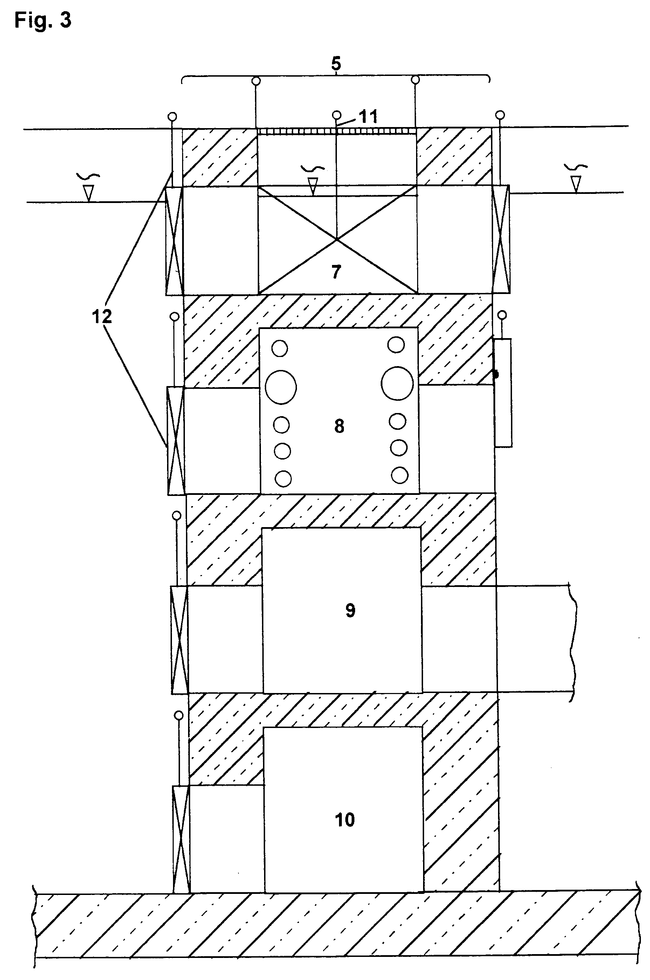

Figur 3 zeigt eine mittlere Trennwand nach den Ansprüchen 4 bis 6. Die Wand ist zellenförmig ausgebildet. Die Betonkonstruktion bildet im Beispiel vier Zellen 7,8,9,10. Die Zellen sind als Ganzes als Medienleitungen - im Beispiel die Zellen 7,9,10 - oder als Rohrkanal - Zelle 8 - verwendbar. Die Medienleitungen sind durch Schieber 11 für den Transport einzelner Medien in Abschnitte teilbar. Schieber 12 ermöglichen den Ein- bzw. Austritt der Medien in den einzelnen Becken.

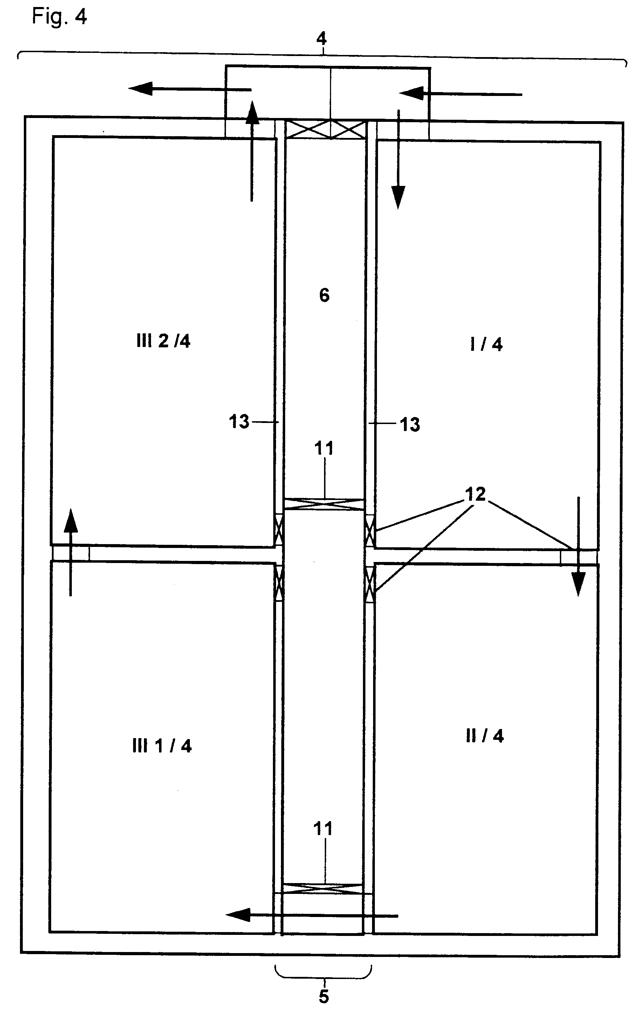

Die Figuren 4 - 8 zeigen an 5 Beispielen für eine Medienleitung, wie bei vorgegebener Anordnung der Trennschieber 11 und der Ein- und Austrittsschieber 12 die Becken in unterschiedlicher Reihenfolge und unter Umfahrung eines Beckens beaufschlagbar sind:
Figur 4 für den Normalfall mit Durchfahrung aller Becken

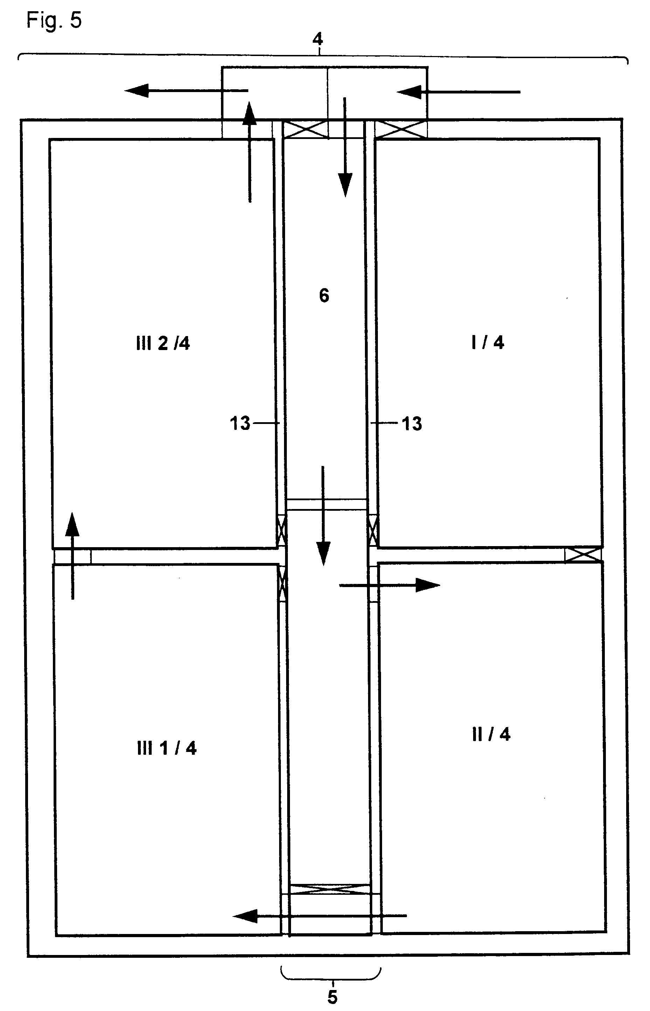

Figur 5 unter Umfahrung des Beckens I

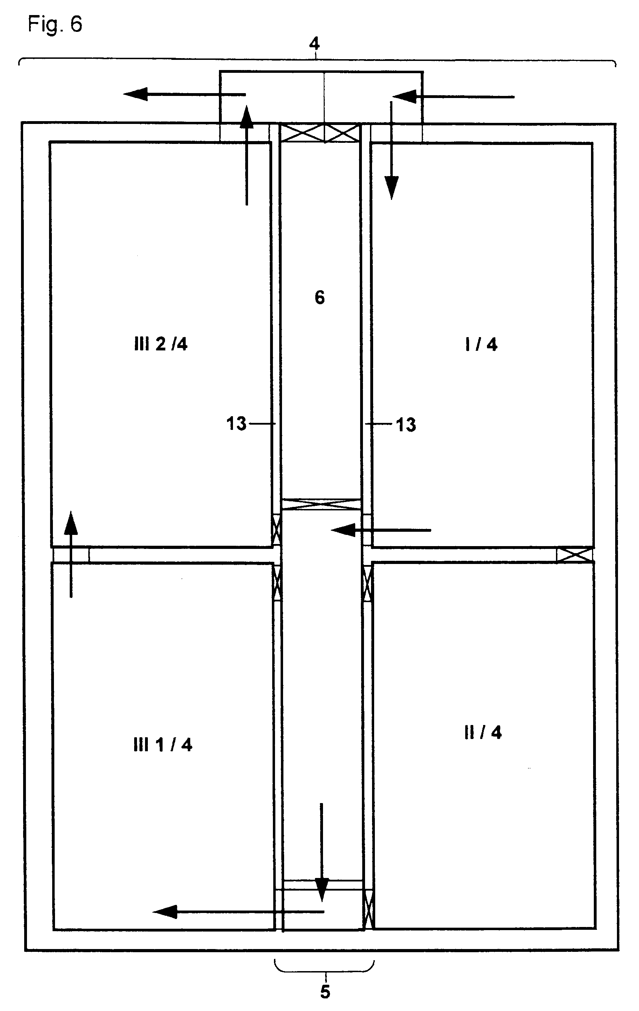

Figur 6 unter Umfahrung des Beckens II

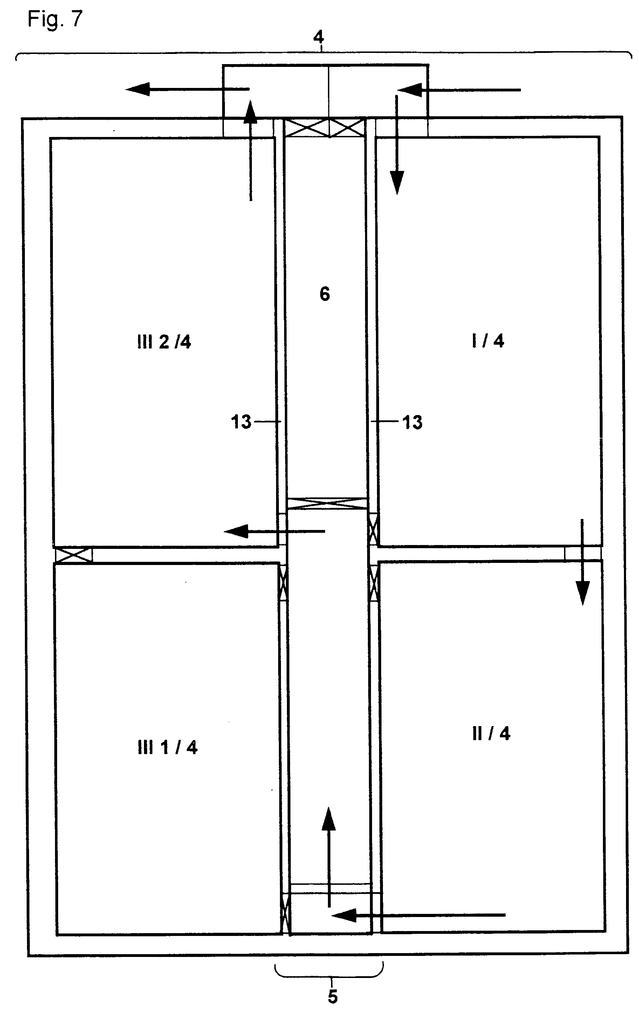

Figur 7 unter Umfahrung des Beckens III/1

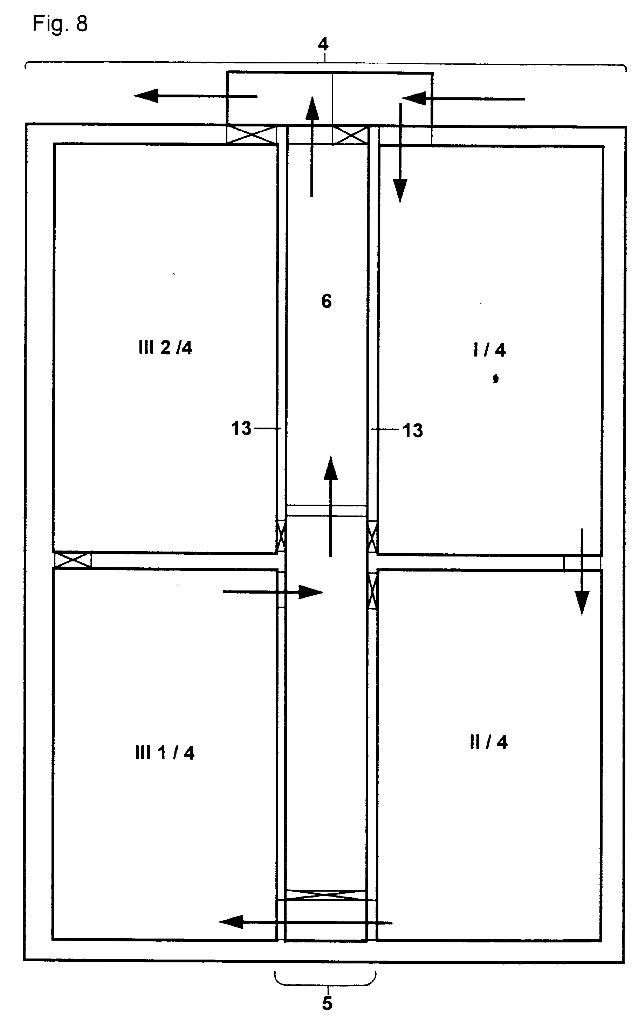

Figur 8 unter Umfahrung des Beckens III/9

## Patentansprüche

1. Kläranlage vornehmlich für kommunale Abwässer,
- mit der das Abwasser in hintereinander stufenweise durchflossenen Becken (I, II, III) mit wechselnden Klärstufen eines Klärverfahrens mindestens teilweise reinigbar ist,
- deren planmäßig durch das Klärverfahren vorgegebenes Beckenvolumen sich Klärstufen abhängig unterschiedlich auf die Becken verteilt, wobei alle Klärstufen bis auf eine nur ein Becken aufweisen und eine Klärstufe - zweckmäßig die vom Volumenanspruch größte - auf zwei Becken aufgeteilt ist,
- deren Becken (I, II, III/1, III/2) eine Gesamtanlage bilden, die durch ein günstiges Verhältnis von Wändflächen zu Beckenvolumen für alle Becken der Anlage baulich zu erhöhter Wirtschaftlichkeit optimiert ist,
- wobei in einer Trennwand (5) zwischen den Becken (I, II, III/1, III/2) ein Beschichtungs- und Umfahrungs- Kanal (7) angeordnet ist, der über Absperrorgane (11) in Abschnitte teilbar ist,
- wobei jedes Becken (I, II, III/1, III/2) über den Kanal (7) durch Verstellung der Absperrorgane (11,12) umfahrbar ist, wobei die verbleibenden Becken unter Erhaltung des Klärverfahrens weiter betreibar sind und hintereinander unter abschnittsweiser Nutzung des Kanals durchflossen werden,
- wobei jedes Becken (I, II, III/1, III/2) mit verschließbaren Zu- und Abläufen (12) ausgestattet ist, die sowohl zum Kanal und in der Trennwand zum jeweiligen Nachbarbecken angeordnet sind,
- wobei bei einer Beckenumfahrung die Zu- und Abläufe (12) dieses Beckens geschlossen, der zugehörige Kanalabschnitt (11) und die Zu- und Abläufe (12) des Nachbarbeckens geöffnet sind.

2. Kläranlage (4) nach Anspruch 1, **dadurch gekennzeichnet**, daß mindestens die Trennwände (5) zwischen nebeneinander angeordneten Becken zweischalig ausgeführt und zwischen den Schalen (6) der Wände (5) die Beschickungs- und Versorgungsleitungen verlegbar sind.

3. Kläranlage (4) nachden Ansprüchen 1 und 2, **dadurch gekennzeichnet**, daß mindestens die Trennwände (5) zwischen nebeneinander angeordneten Becken im Querschnitt zellenförmig ausgebildet sind und die Zellen (6,7,8,9,10) als Transportleitungen zur Verteilung der Medien auf die verschiedenen Becken und/oder als Rohrkanal für die Versorgungsleitungen verwendbar sind.

4. Kläranlage (4) nach Anspruch 3, **dadurch gekennzeichnet**, daß die Zellen (6,7,8,9,10) mit Kamera, Reinigungs- und Saniergeräten befahrbar sind.

5. Kläranlage (4) nach den Ansprüchen 3 u. 4, **dadurch gekennzeichnet**, daß die Zellen (6,7,8,9,10) mindestens bekriechbar sind.

6. Kläranlage (4) nach den Ansprüchen 3 bis 5, **dadurch gekennzeichnet**, daß die Trennwände (5) und die Zellen (7,8,9,10) aus Beton gefertigt sind.

7. Kläranlage (4) nach den Ansprüchen 3 bis 6, **dadurch gekennzeichnet**, daß in den Zellen (7,8,9,10) verschließbare Öffnungen (12) zu den Becken (I,II,III) und Schieber (11), mit denen ein Zellenstrang in Abschnitte für den Transport unterschiedlicher Medien unterteilbar ist, angeordnet sind.

8. Kläranlage (4) nach den Ansprüchen 1 - 7, **dadurch gekennzeichnet**, daß die maschinellen Vorrichtungen innerhalb der Becken (I,II,III) umsetzbar sind.

## Claims

1. Clarification plant primarily for communal waste water,
- by means of which the waste water can at least partly be filtered in tanks units (I, II, III) in a clarifying procedure with varying clarification steps when flowing stepwise through one tank after the other,
- whose tank volume, predetermined systematically by the clarification procedure, is split up variably into the tanks depending on the clarification steps, while all clarification steps except for one dispose of only one tank and one clarification step - practically the one with the biggest volume demand - is divided into two tanks,
- whose tanks (I, II, III/1, III/2) form a plant unit, whose construction is optimized to achieve an increased economic efficiency by a more favorable relation between wall surfaces and tank volume of all the tanks of the plant,
- with a partition wall (5) being arranged between the tanks (I, II, III/1, III/2) with a charging and by-pass canal (7) which can be divided into sections by means of shutoff devices (11),
- where each tank (I, II, III/1, III/2) can be by-passed via the canal (7) by means of rearranging the shutoff devices (11, 12), with the other tanks continuously remaining operable and maintaining the clarification procedure while being flown through one after the other by using the respective section of the canal,
- with each tank (I, II, III/1, III/2) being equipped with in- and outflows (12) which can be shut off and which are being laid out towards the canal as well as towards the partition wall to the respective neighboring tank,
- where in case of the by-passing of one tank the in- and outflows (12) of this tank are closed, while the relevant canal section (11) and the in- and outflows (12) of the neighboring tank are open.

2. Clarification plant (4) according to claim 1 characterized in that at least the partition walls (5) between tanks that are arranged next to each other are constructed as double sheet version and that the charging and supply lines can be arranged between the sheets (6) of the walls (5).

3. Clarification plant (4) according to claims 1 and 2 characterized in that at least the partition walls (5) between tanks that are arranged next to each other are, as cross section, constructed in cellular form, and that the cells (6, 7, 8, 9, 10) can be used as transport lines to distribute the media into the different tanks and/or as tube canal for the supply lines.

4. Clarification plant (4) according to claim 3 characterized in that the cells (6, 7, 8, 9, 10) are accessible for a camera, for cleaning devices and for redevelopment devices.

5. Clarification plant (4) according to claims 3 and 4 characterized in that the cells (6, 7, 8, 9, 10) are passable at least in kneeling position.

6. Clarification plant (4) according to claims 3 to 5 characterized in that the cells (6, 7, 8, 9, 10) are made of concrete.

7. Clarification plant (4) according to claims 3 to 6 characterized in that openings (12) that can be shut off towards the tanks (I, II, III) and sliding gates (11), by means of which a cell line is dividable into sections for the transport of different media, are arranged in the cells (6, 7, 8, 9, 10).

8. Clarification plant (4) according to claims 1 to 7 characterized in that the mechanical devices can be regrouped within the tanks (I, II, III).

## Revendications

1. Installation de clarification principalement pour eaux usées communales,
- par laquelle les eaux usées peuvent être purifiées au moins partiellement dans des unités réservoir (I, II, III) avec des étages de clarification alternantes d'un processus de clarification, traversées l'une après l'autre par étapes,
- dont le volume de réservoirs, prédéterminé systématiquement par le processus de clarification, est réparti entre les réservoirs de façon inégale en dépendance des étages de clarification, tous les étages de clarification à l'exception d'un d'entre eux ayant un seul réservoir, et un étage de'clarification - pratiquement celui avec le volume le plus grand - étant réparti entre deux réservoirs,
- dont les réservoirs (I, II, III/1, III/2) forment un ensemble d'installation dont la construction est optimisée pour atteindre un fonctionnement plus économique par un rapport favorable entre les surfaces des parois et le volume de réservoirs pour tous les réservoirs de l'installation,
- une paroi de séparation (5) entre les réservoirs (I, II, III/1, III/2) étant arrangée avec un canal d'alimentation et de contournage (7), qui peut être divisé en sections à l'aide d'organes d'arrêt (11),
- chaque réservoir (I, II, III/1, III/2) étant contournable par le canal (7) en déplaçant les organes d'arrêt (11, 12), le autres réservoirs continuant à être opérable en maintenant le processus de clarification et étant traversés l'un après l'autre en utilisant une section respective du canal;
- chaque réservoir (I, II, III/1, III/2) étant pourvu d'arrivées et d'écoulements (12) obturables, qui sont dirigés vers le canal aussi bien que, dans la paroi de séparation, vers le réservoir voisin respectif,
- les arrivées et les écoulements (12) de ce réservoir étant fermés en cas de contournement du réservoir, la section de canal associée (11) aussi bien que les arrivées et les écoulements (12) du réservoir voisin étant ouverts.

2. Installation de clarification (4) selon la revendication 1, caractérisée en ce qu'au moins les parois de séparation (5) entre des réservoirs arrangés l'un à côté de l'autre sont réalisées à deux nappes et en ce que les conduites de charge et d'alimentation peuvent être arrangées entre les nappes (6) des parois (5).

3. Installation de clarification (4) selon l'une des revendications 1 et 2, caractérisée en ce qu'au moins les parois de séparation (5) entre des réservoirs arrangés l'un à côté de l'autre sont réalisées, en coupe transversale, en forme de cellules et en ce que les cellules (6, 7, 8, 9, 10) peuvent être utilisées comme conduites de transportation pour répartir les milieux sur les différents réservoirs et/ou comme conduit de tuyaux pour les conduites d'alimentation.

4. Installation de clarification (4) selon la revendication 3, caractérisée en ce qu'il est possible d'entrer dans les cellules (6, 7, 8, 9, 10) avec une caméra, avec des appareils de nettoyage et avec des appareils de rénovation.

5. Installation de clarification (4) selon l'une des revendications 3 et 4, caractérisée en ce qu'il est au moins possible d'entrer dans les cellules (6, 7, 8, 9, 10) à genoux.

6. Installation de clarification (4) selon l'une des revendications 3 à 5, caractérisée en ce que les parois de séparation (5) et les cellules (7, 8, 9, 10) sont faites en béton.

7. Installation de clarification (4) selon l'une des revendications 3 à 6, caractérisée en ce que des ouvertures (12) obturables vers les réservoirs (I, II, III) et des vannes (11), par lesquelles une voie de cellules peut être divisée en sections pour la transportation de milieux différents, sont arrangées dans les cellules (7, 8, 9, 10).

8. Installation de clarification (4) selon l'une des revendications 1 à 7, caractérisée en ce que les dispositions mécaniques peuvent être regroupées à l'intérieur des réservoirs (I, II, III).
